# EUROPEAN PATENT SPECIFICATION

(11) **EP 3 718 683 B1**
(45) Date of publication and mention of the grant of the patent: **01.04.2026**
(21) Application number: 18883802.3
(22) Date of filing: 06.02.2018
(51) Int. Cl.: B23P 19/06, B60K 1/04, B60L 53/80

(54) **BATTERY SWAPPING LOCKING AND UNLOCKING CONTROL SYSTEM AND METHOD**
SYSTEM UND VERFAHREN ZUR STEUERUNG DER VERRIEGELUNG UND ENTRIEGELUNG EINES BATTERIEWECHSELS
SYSTÈME ET PROCÉDÉ DE COMMANDE DE VERROUILLAGE ET DÉVERROUILLAGE D'ÉCHANGE DE BATTERIES

(30) Priority: 30.11.2017 CN 201711235245
(43) Date of publication of application: 07.10.2020
(73) Proprietor: NIO (Anhui) Holding Co., Ltd., Hefei City, Anhui Province (CN)
(72) Inventor: TIAN, Xiaotao, Shanghai (CN); DING, Xikun, Shanghai (CN); MA, Yongyue, Shanghai (CN); BENGTSSON, Jan, Shanghai (CN); LI, Nan, Shanghai (CN)
(74) Representative: Vossius & Partner Patentanwälte Rechtsanwälte mbB
(86) International application number: PCT/CN2018/075471
(87) International publication number: WO 2019/104872

(56) References cited:
- EP-A1- 2 913 155
- WO-A1-2014/204614
- CN-A- 104 614 111
- CN-A- 107 097 067
- CN-U- 203 881 556
- DE-A1- 4 025 430
- DE-A1- 4 410 722
- US-A- 3 307 393
- US-A1- 2015 273 671

## Description

### Technical Field

The invention relates to the field of battery loading and unloading, in particular to a control method for locking/unlocking during battery swapping in a process of vehicle battery replacement for an electric vehicle.

### Background Art

With the supply pressure and exhaust pollution brought about by the consumption of conventional fossil energy, the development of conventional oil-fueled vehicles has entered a sluggish period. In view of this, energy-saving and environment-friendly electric vehicles have been developed very fast in recent years due to the favorable prospect of green energy. At present, in the development process of electric vehicles, due to the limitation of current battery technologies, insufficient battery capacity and long charging time are inevitable problems at this stage. In order to solve such technical problems, in one aspect, the research and development investment in the battery technology itself has increased; and in a further aspect, the investment in development of peripheral technologies for batteries has also increased. For example, battery replacement is a fast, convenient, and safe solution.

In the development direction of battery replacement technology, chassis battery installation and replacement technology has become the mainstream of battery swap arrangements, considering that separating the traction battery from the driver and passengers provides higher safety and more space, wherein the conventional loading method uses threaded rotary tightening structures with a plurality of tightening points in order to ensure firm and safe loading of a battery in the chassis.

Currently, bolt tightening and loosening is mostly realized by the mechanism of a torque wrench and a servo motor with a reducer. However, there is a lack of feedback and record of the torque for tightening and loosening, and also, there is a lack of data tracing for the service life and state of individual bolts. Therefore, closed-loop control cannot be realized. In addition, with inaccurate torque feedback, there is a possibility of improper screwing/unscrewing. Furthermore, as the state of the bolts is not tracked, the subsequent maintenance might not be determined properly, and missing screwing/unscrewing, mis-screwing/unscrewing, deviated screwing/unscrewing, etc. of the bolts cannot be avoided. WO 2014/204614 A1 discloses a battery pack lift system which includes a frame having nutrunners mounted thereon according to a battery pack fastener pattern for a vehicle and a lift configured to raise and lower the frame with regard to a vehicle. Air bearings are provided to allow relative movement between a battery pack and the frame. US 2015/273671 A1 discloses an electric driver configured such that a driver bit is coupled to a drive output shaft of an electric motor via a clutch mechanism to perform screw tightening operations. An appropriate screw tightened state and various inappropriate screw tightened states in a screw tightening operation can be confirmed and determined.

### Summary of the Invention

It is an objective of the invention to provide a control method for locking/unlocking during battery swapping that is capable of feeding back on battery-swap locking/unlocking control by utilizing a fastener state conclusion obtained in a battery-swap process.

It is another objective of the invention to provide a further control method for locking/unlocking during battery swapping that is capable of feeding back on battery-swap locking/unlocking control by utilizing a fastener state conclusion obtained in a battery-swap process.

It is yet another objective of the invention to provide a control system for locking/unlocking during battery swapping that is capable of feeding back on battery-swap locking/unlocking control by utilizing a fastener state conclusion obtained in a battery-swap process.

The present invention is defined by the features of the independent claims(s). Preferred embodiments are defined by the features of the dependent claims, respectively. In order to achieve the objectives of the invention, according to an aspect of the invention, there is provided a control method according to claim 1.

Optionally, the step S100 comprises: step S110, setting the preset locking/unlocking parameters as the locking/unlocking parameter standards, if no fastener state conclusion is stored; step S120, setting the preset locking/unlocking parameters based on the adaptive locking/unlocking parameters, if the stored fastener state conclusion shows that the fastener service state is normal; and step S130, replacing the fastener after the battery-swap unlocking operation is completed, if the stored fastener state conclusion shows that the fastener service state is abnormal.

Optionally, the battery-swap step S200 comprises an unlocking mode S210, and in the unlocking mode S210, the following substeps are carried out: a joining substep S211, in which a fastener locking/unlocking device is driven, within a first set interval of the number of turns for joining, to center on and engage with an end of the fastener until a screwing torque of the fastener locking/unlocking device increases to a set centering torque, by which time it is determined that the centering of the fastener locking/unlocking device on the fastener has succeeded; and/or an unlocking substep S212, in which the fastener locking/unlocking device is driven, within a set interval of the number of turns for unlocking, to unscrew the fastener until an unscrewing torque decreases to a set unlocking torque, by which time it is determined that the fastener has been successfully unlocked; and/or an abnormality determination substep S213, in which when the number of turns for joining of the fastener locking/unlocking device is within the first set interval of the number of turns for joining, if the screwing torque does not increase to the set centering torque, it is determined that the fastener centering is abnormal; and/or when the number of turns for unlocking of the fastener locking/unlocking device is greater than the set interval of the number of turns for unlocking, if the unscrewing torque does not decrease to the set unlocking torque, it is determined that the fastener unlocking is abnormal.

Optionally, the step S200 comprises a locking mode S220, and in the locking mode S220, the following substeps are carried out: a joining substep S221, in which a fastener locking/unlocking device is driven, within a second set interval of the number of turns for joining, to center on and engage with an end of the fastener; and/or a locking substep S222, in which the fastener locking/unlocking device is driven, within a set interval of the number of turns for locking, to unscrew the fastener until a screwing torque increases to a set locking torque, by which time it is determined that the fastener has been successfully locked; and/or an abnormality determination substep S223, in which when the screwing torque increases to the set locking torque, if the number of turns for locking of the fastener locking/unlocking device is less than the set interval of the number of turns for locking, it is determined that the fastener locking is abnormal; and/or when the number of turns for locking of the fastener locking/unlocking device is greater than the set interval of the number of turns for locking, if the screwing torque does not increase to the set locking torque, it is determined that the fastener locking is abnormal.

According to the invention, the fastener state conclusion includes the following ones:
the fastener service state is normal, and the adaptive locking/unlocking parameters correspond to the previous preset locking/unlocking parameters; or the fastener service state is normal, and the adaptive locking/unlocking parameters include an increased or decreased screwing/unscrewing torque of the fastener, and/or an increased or decreased number of turns of the fastener; or the fastener service state is abnormal, and the fastener is to be replaced.

In order to achieve the objectives of the invention, according to another aspect of the invention, there is provided a control method according to claim 5.

Optionally, the step S100 comprises: step S110, setting the preset locking/unlocking parameters as the locking/unlocking parameter standards, if there is no real-time locking/unlocking operation parameters and no fastener state conclusion is stored; step S120, setting the preset locking/unlocking parameters based on the adaptive locking/unlocking parameters, if the stored fastener state conclusion shows that the fastener service state is normal; and step S130, replacing the fastener after the battery-swap unlocking operation is completed, if the stored fastener state conclusion shows that the fastener service state is abnormal.

Optionally, the battery-swap step S200 comprises an unlocking mode S210, and in the unlocking mode S210, the following substeps are carried out: a joining substep S211, in which a fastener locking/unlocking device is driven, within a first set interval of the number of turns for joining, to center on and engage with an end of the fastener until a screwing torque of the fastener locking/unlocking device increases to a set centering torque, by which time it is determined that the centering of the fastener locking/unlocking device on the fastener has succeeded; and/or an unlocking substep S212, in which the fastener locking/unlocking device is driven, within a set interval of the number of turns for unlocking, to unscrew the fastener until an unscrewing torque decreases to a set unlocking torque, by which time it is determined that the fastener has been successfully unlocked; and/or an abnormality determination substep S213, in which when the number of turns for joining of the fastener locking/unlocking device is within the first set interval of the number of turns for joining, if the screwing torque does not increase to the set centering torque, it is determined that the fastener centering is abnormal; and/or when the number of turns for unlocking of the fastener locking/unlocking device is greater than the set interval of the number of turns for unlocking, if the unscrewing torque does not decrease to the set unlocking torque, it is determined that the fastener unlocking is abnormal.

Optionally, the battery-swap step S200 comprises a locking mode S220, and in the locking mode S220, the following substeps are carried out: a joining substep S221, in which a fastener locking/unlocking device is driven, within a second set interval of the number of turns for joining, to center on and engage with an end of the fastener; and/or a locking substep S222, in which the fastener locking/unlocking device is driven, within a set interval of the number of turns for locking, to unscrew the fastener until a screwing torque increases to a set locking torque, by which time it is determined that the fastener has been successfully locked; and/or an abnormality determination substep S223, in which when the screwing torque increases to the set locking torque, if the number of turns for locking of the fastener locking/unlocking device is less than the set interval of the number of turns for locking, it is determined that the fastener locking is abnormal; and/or when the number of turns for locking of the fastener locking/unlocking device is greater than the set interval of the number of turns for locking, if the screwing torque does not increase to the set locking torque, it is determined that the fastener locking is abnormal.

According to the invention, the fastener state conclusion includes the following ones:
the fastener service state is normal, and the adaptive locking/unlocking parameters correspond to the previous preset locking/unlocking parameters; or the fastener service state is normal, and the adaptive locking/unlocking parameters include an increased or decreased screwing/unscrewing torque of the fastener, and/or an increased or decreased number of turns of the fastener; or the fastener service state is abnormal, and the fastener is to be replaced.

In order to achieve the objectives of the invention, according to yet another aspect of the invention, there is also provided a control system according to claim 9.

According to the invention, the fastener state conclusion includes the following ones:
the fastener service state is normal, and the adaptive locking/unlocking parameters correspond to the previous preset locking/unlocking parameters; or the fastener service state is normal, and the adaptive locking/unlocking parameters include an increased or decreased screwing/unscrewing torque of the fastener, and/or an increased or decreased number of turns of the fastener; or the fastener service state is abnormal, and the fastener is to be replaced.

According to the invention, the real-time locking/unlocking operation parameters, locking/unlocking parameter standards and preset locking/unlocking parameters include: a screwing/unscrewing torque and a number of turns.

### Brief Description of the Drawings

Fig. 1 is a schematic diagram of a control system for locking/unlocking during battery swapping of the invention.
Fig. 2 is a block diagram of the control flow of a control method for locking/unlocking during battery swapping of the invention.
Fig. 3 is a flow chart of an embodiment of the control method for locking/unlocking during battery swapping of the invention.

### Detailed Description of Embodiments

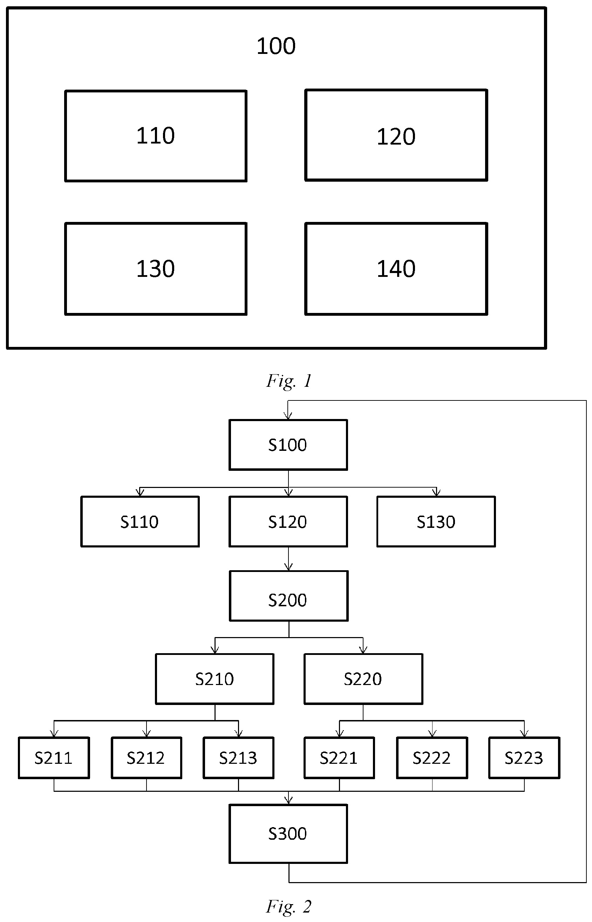

Referring to Fig. 1, according to an embodiment of the invention, there is provided a control system for locking/unlocking during battery swapping. A control system 100 for locking/unlocking during battery swapping comprises a parameter monitoring module 110, a parameter storage module 120, a battery-swap control module 130 and a battery-swap execution module 140.

The parameter monitoring module 110 is used for monitoring real-time locking/unlocking operation parameters of each fastener to provide a data basis for subsequent use, for example, storage, analysis and trace, of the parameters. The parameter storage module 120 is used for storing the real-time locking/unlocking operation parameters of each fastener, so as to facilitate data analysis and data trace by the battery-swap control module 130 in a subsequent battery swap process. In particular, in an example of the invention, as a core component for realizing data analysis and tracing, the battery-swap control module 130 is used for obtaining a respective fastener state conclusion by comparing the real-time locking/unlocking operation parameters of each fastener with locking/unlocking parameter standards, the fastener state conclusion including a fastener service state and adaptive locking/unlocking parameters of each fastener; and setting preset locking/unlocking parameters of the fastener and/or replacing the fastener based on a stored fastener state conclusion of each fastener. In addition, after the data analysis and tracing is completed, the battery-swap execution module 140 executes a battery-swap locking operation and a battery-swap unlocking operation based on preset locking/unlocking parameters of each fastener set by the battery-swap control module and executes a battery replacement operation.

According to the control system for locking/unlocking during battery swapping of the invention, by collecting locking/unlocking operation parameters of each fastener in the process of locking/unlocking, the state record and data tracing of each fastener are realized. These parameters are analyzed before the next locking/unlocking process to obtain the corresponding fastener service state, and control variables of the locking/unlocking process are adjusted based on the fastener service state, thus realizing the closed-loop control of a plurality of fasteners in the process of locking/unlocking, and obtaining a more proper and reliable locking/unlocking process.

As the several key parameters involved in the control system for locking/unlocking during battery swapping, examples will be given below for further illustration. The real-time locking/unlocking operation parameters mentioned above refer to the parameters acquired in real time during the process of executing locking/unlocking, but without the limitation that the subsequent data storage and data analysis processes must also be performed in real time. For example, the storage action and analysis action can be carried out in stages or in real time, which will depend on the needs in actual situations.

In addition, the fastener state conclusion includes the following ones: the fastener service state is normal, and the adaptive locking/unlocking parameters correspond to the previous preset locking/unlocking parameters; or the fastener service state is normal, and the adaptive locking/unlocking parameters include an increased or decreased screwing/unscrewing torque of the fastener, and/or an increased or decreased number of turns of the fastener; or the fastener service state is abnormal, and the fastener is to be replaced. With regard to the two types of parameters, the first one is about the service state of the fastener, which enables an operator to learn about the current state of the fastener intuitively, while the adaptive locking/unlocking parameters facilitate the reliable and correct completion of the locking/unlocking process.

The real-time locking/unlocking operation parameters, locking/unlocking parameter standards and preset locking/unlocking parameters include: a screwing/unscrewing torque and a number of turns. The two parameters are also common control parameters in the process of fastener locking and unlocking. The setting of such target control parameters enables the control system to be better compatible with other control systems in the prior art, thus realizing the desired closed-loop control of the present system in other systems.

Referring to Fig. 2, an embodiment of a control method for locking/unlocking during battery swapping is also provided herein. The method comprises steps S100, S200 and S300 to be described hereinafter.

The step S100 comprises: setting preset locking/unlocking parameters of each fastener and/or triggering an operation of replacing the fastener so as to replace the fastener during the battery swap operation based on a stored fastener state conclusion of each fastener. It should be noted that setting preset locking/unlocking parameters of each fastener and/or triggering an operation of replacing the fastener based on a stored fastener state conclusion of each fastener may be any one of the following three cases: setting preset locking/unlocking parameters of each fastener and triggering an operation of replacing the fastener based on a stored fastener state conclusion of each fastener; setting preset locking/unlocking parameters of each fastener based on a stored fastener state conclusion of each fastener; and triggering an operation of replacing the fastener based on a stored fastener state conclusion of each fastener.

The step S200 comprises: executing a battery-swap locking operation and a battery-swap unlocking operation based on the preset locking/unlocking parameters of each fastener, and executing a battery replacement operation.

The step S300 comprises: monitoring in real time and storing the real-time locking/unlocking operation parameters of each fastener, and obtaining a fastener state conclusion of each fastener by comparing the real-time locking/unlocking operation parameters of each fastener with locking/unlocking parameter standards, the fastener state conclusion including a fastener service state and adaptive locking/unlocking parameters of each fastener. This control method can be applied to a conventional battery swap method by slight modifications before and after the conventional battery swap step. For example, real-time locking/unlocking operation parameters are detected and obtained in the battery swap process. These data are stored, and real-time analysis or retrospective analysis is carried out on these data, acquiring a fastener state conclusion of each fastener by comparing the real-time locking/unlocking operation parameters with locking/unlocking parameter standards; and these data are read the next time the vehicle or vehicle battery corresponding to the same batch of fasteners is to be serviced or swapped, so as to establish appropriate preset locking/unlocking parameters and/or trigger the operation of replacing the fasteners for executing locking/unlocking operations, and ensure that each battery-swap step can be reliably and correctly performed. In addition, in the exemplary description herein, step S100 is also referred to as a preprocessing step, without the limitation that step S100 must be a preprocessing step, but for convenience of description. Similarly, step S200 is also referred to as a battery-swap step by way of example and not limitation, and S300 is also referred to as a locking/unlocking parameter processing step by way of example and not limitation.

These steps will be described in more detail hereinafter to illustrate what operations are to be performed in various specific situations.

For example, the preprocessing step S100 further comprises: step S110, in which if no fastener state conclusion is stored, it is most likely that the fastener is used for the first time, and it is unlikely that the fastener has been worn out or damaged, etc., in which case the preset locking/unlocking parameters can be directly set as the locking/unlocking parameter standards; step S120, in which if the stored fastener state conclusion indicates that the fastener service state is normal, it means that the fastener has been used several times, but has not worn to an unusable state, and has not been subjected to failures during screwing/unscrewing, such as being stripped, etc., in which case the preset locking/unlocking parameters can be set based on the adaptive locking/unlocking parameters; and step S130, in which if the stored fastener state conclusion indicates that the fastener service state is abnormal, it means that the fastener has been used for more than a certain number of times and needs to be scrapped and replaced, otherwise there is a risk of unexpected failures, or the fastener has failed during the last screwing operation, in which case the operation of replacing the fastener is triggered, so as to replace the fastener after the battery-swap unlocking operation is completed.

As another example, the battery-swap step S200 comprises an unlocking mode S210. In the unlocking mode S210, the following substeps are performed. In a joining substep S211, a fastener locking/unlocking device is driven, within a first set interval of the number of turns for joining, to center on and engage with an end of the fastener until a screwing torque of the fastener locking/unlocking device increases to a set centering torque, by which time it is determined that the centering of the fastener locking/unlocking device on the fastener has succeeded. With regard to joining for fastener locking, since the bolt to be joined in this case is in a fastened state, it is necessary to additionally refer to the screwing/unscrewing torque in an engaged state in order to determine whether the joining is successful. Through the joining substep S211, the identification and engagement of the end of the fastener to be unscrewed by the fastener locking/unlocking device can be realized, for example, the identification and engagement of a bolt cap at the end of the bolt to be unscrewed by a torque gun can be realized. This step, which is a preliminary step for unscrewing the bolt, should not take too much effort and is therefore generally required to be completed in a relatively short time. In this case, optionally, the first set interval of the number of turns for joining is set as 1 to 2 turns.

After the joining substep S211 is completed, the step further comprises an unlocking substep S212, in which the fastener locking/unlocking device is driven, within a set interval of the number of turns for unlocking, to unscrew the fastener until an unscrewing torque decreases to a set unlocking torque, by which time it is determined that the fastener has been successfully unlocked. Through the unlocking substep S212, the fastener locking/unlocking device can unscrew the fastener to be unscrewed to a released state. If a vehicle battery is taken as an example, bolts are unscrewed from the battery and a vehicle chassis by torque guns, such that fixation of the battery to the vehicle chassis is released. In addition, whether the foregoing unlocking process is successful or not can be determined according to data feedback of the unscrewing torque and the number of turns. For example, only when the bolt screwing/unscrewing element is turned within the set interval of the number of turns for unlocking until the unscrewing torque of the bolt screwing/unscrewing element decreases to the set unlocking torque, can it be determined that the bolt has been successfully unlocked. As an example, optionally, the interval of the number of turns for unlocking is set as 8 to 12 turns.

Specifically, in the aforementioned unlocking process, the unscrewing torque is almost zero before the torque gun is engaged with the end of the bolt. In this process, the number of turns of the torque gun also increases evenly. After the torque gun is successfully engaged with the end of the bolt, the static preload force on the torque gun increases sharply. The unlocking process will then begin. After being subjected to the unscrewing torque for a certain period of time, the bolt starts to get loose, at which time the static preload force experienced by the torque gun starts to be converted into a dynamic preload force, and the magnitude of the force starts to decrease significantly until the unscrewing torque of the torque gun decreases to the set unlocking torque, such that the bolt unlocking process is completed. In consideration of experimental errors and possible influence factors in practical applications, the foregoing set parameters may also be set within a reasonable range, instead of being limited to a specific value.

In addition, in order to protect the bolt structure and improve the reliability of the bolt unlocking process, there is also provided an abnormality determination substep S213, in which when the number of turns for joining of the fastener locking/unlocking device is within the first set interval of the number of turns for joining, if the screwing torque does not increase to the set centering torque, it is determined that the fastener centering is abnormal; and/or when the number of turns for unlocking of the fastener locking/unlocking device is greater than the set interval of the number of turns for unlocking, if the unscrewing torque does not decrease to the set unlocking torque, it is determined that the fastener unlocking is abnormal.

As another example, the battery-swap step S200 comprises a locking mode S220, and in the locking mode S220, the following substeps are performed. In a joining substep S221, a fastener locking/unlocking device is driven, within a second set interval of the number of turns for joining, to center on and engage with an end of the fastener. Through the joining substep S221, the identification and engagement of the end of the fastener to be screwed by the fastener locking/unlocking device can be realized, for example, a torque gun identifies and engages with a bolt cap at the end of the bolt. This step, which is a preliminary step for screwing the bolt, should not take too much effort and is therefore generally required to be completed in a relatively short time. In this case, optionally, the second set interval of the number of turns for joining is set as 1 to 2 turns.

After the joining substep S221 is completed, the step further comprises a locking substep S222, in which the fastener locking/unlocking device is driven, within a set interval of the number of turns for locking, to unscrew the fastener until a screwing torque increases to a set locking torque, by which time it is determined that the fastener has been successfully locked. Through the locking substep S222, the fastener locking/unlocking device can screw the fastener to be screwed to a target position. If a vehicle battery is taken as an example, bolts are screwed by torque guns until a battery is fixed to a vehicle chassis. In addition, whether the foregoing locking process is successful or not can also be determined according to data feedback of the screwing torque and the number of turns. For example, only when the torque gun is turned, within the set interval of the number of turns for locking, until the screwing torque thereof increases to the set locking torque, can it be determined that the bolt has been successfully locked.

Specifically, in the aforementioned locking process, the screwing torque is almost zero before the torque gun is engaged with the end of the bolt; and as the torque gun gets closer to the end of the bolt, its traveling speed will reduce evenly. In this process, the number of turns of the torque gun also increases evenly. After the torque gun is successfully engaged with the end of the bold, the locking process will begin, and the torque gun will keep screwing the bolt at a uniform speed. The dynamic preload force experienced by the torque gun gradually increases as the screwing of the bolt goes on, so that the locking torque required to be applied also gradually increases with rapid adjustment following the set value until the set value is reached, such that the bolt locking process is completed. In consideration of experimental errors and possible influence factors in practical applications, the foregoing set parameters may be set within a reasonable range, instead of being limited to a specific value.

In addition, in order to protect the bolt structure and improve the reliability of the bolt locking process, there is also provided an abnormality determination substep S223, in which when the screwing torque increases to the set locking torque, if the number of turns for locking of the fastener locking/unlocking device is less than the set interval of the number of turns for locking, it is determined that the fastener locking is abnormal, and the abnormal situation in this case may be a stuck bolt; and/or when the number of turns for locking of the fastener locking/unlocking device is greater than the set interval of the number of turns for locking, if the screwing torque does not increase to the set locking torque, it is determined that the fastener locking is abnormal, and the abnormal situation in this case may be a stripped bolt. Through the abnormality determination substep S223, when the bolt locking is not successful, whether an abnormal condition exists or not and the possible abnormality type can be determined based on the parameters that have been fed back.

Furthermore, in S300, the fastener state conclusion includes the following ones: if the fastener is used for the first time, then the fastener service state is normal, and the adaptive locking/unlocking parameters correspond to the previous preset locking/unlocking parameters. When the fastener is used for the first time but can still be used further, the fastener service state is normal, and the adaptive locking/unlocking parameters include an increased or decreased screwing/unscrewing torque of the fastener and/or an increased or decreased number of turns of the fastener. For example, when the fastener is used for many times, although there is no failure, it may require a larger screwing/unscrewing torque or more turns to tighten or loosen the fastener, or when the fastener is slightly damaged, it may require a smaller screwing/unscrewing torque to avoid further serious damage. When the fastener has been seriously damaged or used more than the set safety times, the fastener is deemed to be in an abnormal service state and needs to be replaced.

With continued reference to Fig. 2, another embodiment of the control method for locking/unlocking during battery swapping is also provided herein, which is substantially similar to the previous embodiment of the control method for locking/unlocking during battery swapping. The differences between the two will be explained mainly hereinafter, and the similarities can be referred to the specific description in the embodiment described above.

The control method for locking/unlocking during battery swapping comprises: a preprocessing step S100, obtaining a fastener state conclusion of each fastener from processing by comparing the stored real-time locking/unlocking operation parameters of each fastener with locking/unlocking parameter standards, the fastener state conclusion including a fastener service state and adaptive locking/unlocking parameters, and setting preset locking/unlocking parameters of each fastener and/or replacing the fastener based on the obtained fastener state conclusion of each fastener; a battery-swap step S200, executing a battery-swap locking operation and a battery-swap unlocking operation based on the preset locking/unlocking parameters of each fastener, and executing a battery replacement operation; and a locking/unlocking parameter processing step S300, monitoring and storing the real-time locking/unlocking operation parameters of each fastener.

Compared with the previous embodiment, the main difference of this embodiment is that the data analysis and tracing process is provided in the preprocessing step S100 instead of in the battery-swap locking/unlocking parameter processing step S300. That is, after the current battery swap process is completed, the real-time locking/unlocking operation parameters involved are only monitored and stored, while the analysis and tracing operations are retained until right before the next battery swap process.

The improved preprocessing step S100 will be further refined as follows.

For example, the preprocessing step S100 comprises: step S110, setting the preset locking/unlocking parameters as the locking/unlocking parameter standards, if there is no real-time locking/unlocking operation parameters and no fastener state conclusion is stored; step S120, setting the preset locking/unlocking parameters based on the adaptive locking/unlocking parameters, if the stored fastener state conclusion shows that the fastener service state is normal; and step S130, replacing the fastener after the battery-swap unlocking operation is completed, if the stored fastener state conclusion shows that the fastener service state is abnormal.

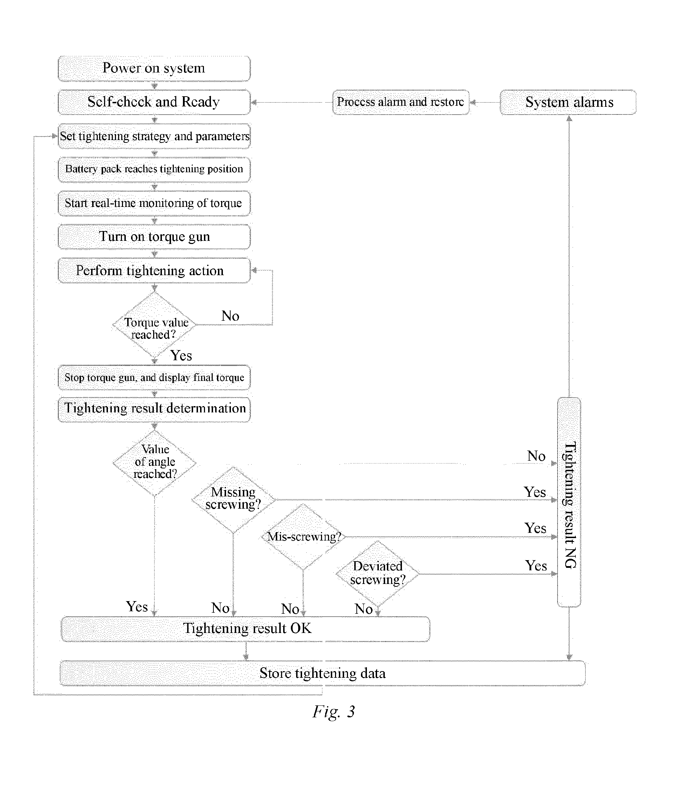

For ease of understanding, the battery swap locking process shown in Fig. 3 will be described below in conjunction with the methods described in the previous embodiments.

First, the control system for locking/unlocking during battery swapping is powered on and a self-check of the system is performed. After the self-check is done and no failure is reported, the system is in a standby mode. At this time, a preprocessing step S100 can be performed to trace whether there is a use record and a recorded fastener state conclusion for the vehicle battery and fasteners associated with the current vehicle to be serviced, so as to further determine which operation strategy to adopt among a first-time battery swap mode S110, a non-first-time battery swap mode S120, and a fastener replacement mode S130. After the strategy designation is completed, the battery swap step S200 is started, and the battery to be swapped is moved to a desired tightening position to start a tightening operation, while data monitoring is performed synchronously. Specifically, a torque gun can be turned on first to perform joining and tightening actions, and whether to stop the screwing action of the torque gun can be confirmed by whether a screwing torque value is reached. After the screwing torque value is reached, a result determination is started. If the number of turns/screwing angle reaches the standard and there is no phenomenon of missing screwing, mis-screwing or deviated screwing, the locking is deemed to be successful and the locking process is completed, and the battery-swap locking/unlocking parameter processing step S300 is performed to make preparations for data analysis and tracing. If any of the above undesired situations occurs, the locking is deemed to be failed. On the one hand, an alarm needs to be fed back to the system; and on the other hand, the battery-swap locking/unlocking parameter processing step S300 is also required to make preparations for data analysis and tracing.

The above examples mainly illustrate the control method for locking/unlocking during battery swapping and the control system for locking/unlocking during battery swapping of the invention. Although only some embodiments of the invention are described, it will be appreciated by those skilled in the art that the invention may be embodied in many other forms without departing from the scope thereof as defined in the claims. Therefore, the examples and embodiments shown should be considered as illustrative rather than restrictive, and various modifications may be covered by the invention as defined in the appended claims.

## Claims

1. A control method for locking and unlocking during battery swapping, the battery fixed in an electric vehicle by a plurality of fasteners, **characterized by** comprising:
step S100, setting preset locking and unlocking parameters of each fastener or triggering an operation of replacing the fastener based on a stored fastener state conclusion of each fastener, the preset locking and unlocking parameters including a screwing and unscrewing torque and a number of turns;
step S200, executing a battery-swap unlocking operation, a battery replacement operation and a battery-swap locking operation based on the preset locking and unlocking parameters of each fastener; and
step S300, monitoring and storing real-time locking and unlocking operation parameters of each fastener in the process of unlocking and locking operations, and obtaining a fastener state conclusion of each fastener by comparing the real-time locking and unlocking operation parameters of each fastener with locking and unlocking parameter standards, the real-time locking and unlocking operation parameters including a screwing and unscrewing torque and a number of turns, the locking and unlocking parameter standards including a screwing and unscrewing torque and a number of turns, and the fastener state conclusion including a fastener service state and adaptive locking and unlocking parameters of each fastener,
wherein the fastener state conclusion includes the following ones:
the fastener service state is normal, and the adaptive locking and unlocking parameters correspond to the previous preset locking and unlocking parameters; or
the fastener service state is normal, and the adaptive locking and unlocking parameters include an increased or decreased screwing and unscrewing torque of the fastener, and/or an increased or decreased number of turns of the fastener; or
the fastener service state is abnormal, and the fastener is to be replaced.

2. The control method according to claim 1, **characterized in that** the step S100 comprises:
step S110, setting the preset locking and unlocking parameters as the locking and unlocking parameter standards, if there is no stored fastener state conclusion;
step S120, setting the preset locking and unlocking parameters based on the adaptive locking and unlocking parameters, if the stored fastener state conclusion shows that the fastener service state is normal; and
step S130, triggering the operation of replacing the fastener so as to replace the fastener after the battery-swap unlocking operation is completed, if the stored fastener state conclusion shows that the fastener service state is abnormal.

3. The control method according to claim 1, **characterized in that** the step S200 comprises an unlocking mode S210, in which the following substeps are carried out:
a joining substep S211, in which a fastener locking and unlocking device is driven, within a first set interval of the number of turns for joining, to center on and engage with an end of the fastener until a screwing torque of the fastener locking and unlocking device increases to a set centering torque, by which time it is determined that the centering of the fastener locking and unlocking device on the fastener has succeeded; and/or
an unlocking substep S212, in which the fastener locking and unlocking device is driven, within a set interval of the number of turns for unlocking, to unscrew the fastener until an unscrewing torque decreases to a set unlocking torque, by which time it is determined that the fastener has been successfully unlocked; and/or
an abnormality determination substep S213, in which when the number of turns for joining of the fastener locking and unlocking device is within the first set interval of the number of turns for joining, if the screwing torque does not increase to the set centering torque, it is determined that the fastener centering is abnormal; and/or when the number of turns for unlocking of the fastener locking and unlocking device is greater than the set interval of the number of turns for unlocking, if the unscrewing torque does not decrease to the set unlocking torque, it is determined that the fastener unlocking is abnormal.

4. The control method according to claim 1, **characterized in that** the battery-swap step S200 comprises a locking mode S220, in which the following substeps are carried out:
a joining substep S221, in which a fastener locking and unlocking device is driven, within a second set interval of the number of turns for joining, to center on and engage with an end of the fastener; and/or
a locking substep S222, in which the fastener locking and unlocking device is driven, within a set interval of the number of turns for locking, to unscrew the fastener until a screwing torque increases to a set locking torque, by which time it is determined that the fastener has been successfully locked; and/or
an abnormality determination substep S223, in which when the screwing torque increases to the set locking torque, if the number of turns for locking of the fastener locking and unlocking device is less than the set interval of the number of turns for locking, it is determined that the fastener locking is abnormal; and/or when the number of turns for locking of the fastener locking and unlocking device is greater than the set interval of the number of turns for locking, if the screwing torque does not increase to the set locking torque, it is determined that the fastener locking is abnormal.

5. A control method for locking and unlocking during battery swapping, the battery fixed in an electric vehicle by a plurality of fasteners, **characterized by** comprising:
step S100, obtaining a fastener state conclusion of each fastener from processing by comparing the stored real-time locking and unlocking operation parameters of each fastener with locking and unlocking parameter standards, the real-time locking and unlocking operation parameters including a screwing and unscrewing torque and a number of turns, the locking and unlocking parameter standards including a screwing and unscrewing torque and a number of turns, and the fastener state conclusion including a fastener service state and adaptive locking and unlocking parameters; and setting preset locking and unlocking parameters of each fastener or replacing the fastener based on the obtained fastener state conclusion of each fastener, the preset locking and unlocking parameters including a screwing and unscrewing torque and a number of turns;
step S200, executing a battery-swap locking operation and a battery-swap unlocking operation based on the preset locking and unlocking parameters of each fastener, and executing a battery replacement operation; and
step S300, monitoring and storing the real-time locking and unlocking operation parameters of each fastener,
wherein the fastener state conclusion includes the following ones:
the fastener service state is normal, and the adaptive locking and unlocking parameters correspond to the previous preset locking and unlocking parameters; or
the fastener service state is normal, and the adaptive locking and unlocking parameters include an increased or decreased screwing and unscrewing torque of the fastener, and/or an increased or decreased number of turns of the fastener; or
the fastener service state is abnormal, and the fastener is to be replaced.

6. The control method according to claim 5, **characterized in that** the step S100 comprises:
step S110, setting the preset locking and unlocking parameters as the locking and unlocking parameter standards, if there is no real-time locking and unlocking operation parameters and no fastener state conclusion is stored;
step S120, setting the preset locking and unlocking parameters based on the adaptive locking and unlocking parameters, if the stored fastener state conclusion shows that the fastener service state is normal; and
step S130, replacing the fastener after the battery-swap unlocking operation is completed, if the stored fastener state conclusion shows that the fastener service state is abnormal.

7. The control method according to claim 5, **characterized in that** the battery-swap step S200 comprises an unlocking mode S210, in which the following substeps are carried out:
a joining substep S211, in which a fastener locking and unlocking device is driven, within a first set interval of the number of turns for joining, to center on and engage with an end of the fastener until a screwing torque of the fastener locking and unlocking device increases to a set centering torque, by which time it is determined that the centering of the fastener locking and unlocking device on the fastener has succeeded; and/or
an unlocking substep S212, in which the fastener locking and unlocking device is driven, within a set interval of the number of turns for unlocking, to unscrew the fastener until an unscrewing torque decreases to a set unlocking torque, by which time it is determined that the fastener has been successfully unlocked; and/or
an abnormality determination substep S213, in which when the number of turns for joining of the fastener locking and unlocking device is within the first set interval of the number of turns for joining, if the screwing torque does not increase to the set centering torque, it is determined that the fastener centering is abnormal; and/or when the number of turns for unlocking of the fastener locking and unlocking device is greater than the set interval of the number of turns for unlocking, if the unscrewing torque does not decrease to the set unlocking torque, it is determined that the fastener unlocking is abnormal.

8. The control method according to claim 5, **characterized in that** the battery-swap step S200 comprises a locking mode S220, and in the locking mode S220, the following substeps are carried out:
a joining substep S221, in which a fastener locking and unlocking device is driven, within a second set interval of the number of turns for joining, to center on and engage with an end of the fastener; and/or
a locking substep S222, in which the fastener locking and unlocking device is driven, within a set interval of the number of turns for locking, to unscrew the fastener until a screwing torque increases to a set locking torque, by which time it is determined that the fastener has been successfully locked; and/or
an abnormality determination substep S223, in which when the screwing torque increases to the set locking torque, if the number of turns for locking of the fastener locking and unlocking device is less than the set interval of the number of turns for locking, it is determined that the fastener locking is abnormal; and/or when the number of turns for locking of the fastener locking and unlocking device is greater than the set interval of the number of turns for locking, if the screwing torque does not increase to the set locking torque, it is determined that the fastener locking is abnormal.

9. A control system (100) for locking and unlocking during battery swapping, the battery fixed in an electric vehicle by a plurality of fasteners, **characterized by** comprising:
a parameter monitoring module (110) for monitoring real-time locking and unlocking operation parameters of each fastener, the real-time locking and unlocking operation parameters including a screwing and unscrewing torque and a number of turns;
a parameter storage module (120) for storing the real-time locking and unlocking operation parameters of each fastener;
a battery-swap control module (130) used for obtaining a respective fastener state conclusion by comparing the real-time locking and unlocking operation parameters of each fastener with locking and unlocking parameter standards, the locking and unlocking parameter standards including a screwing and unscrewing torque and a number of turns, and the fastener state conclusion including a fastener service state and adaptive locking and unlocking parameters of each fastener; and setting preset locking and unlocking parameters of the fastener or replacing the fastener based on a stored fastener state conclusion of each fastener, the preset locking and unlocking parameters including a screwing and unscrewing torque and a number of turns; and
a battery-swap execution module (140), which executes a battery-swap locking operation and a battery-swap unlocking operation based on the preset locking and unlocking parameters of each fastener set by the battery-swap control module (130) and executes a battery replacement operation,
wherein the fastener state conclusion includes the following ones:
the fastener service state is normal, and the adaptive locking and unlocking parameters correspond to the previous preset locking and unlocking parameters; or
the fastener service state is normal, and the adaptive locking and unlocking parameters include an increased or decreased screwing and unscrewing torque of the fastener, and/or an increased or decreased number of turns of the fastener; or
the fastener service state is abnormal, and the fastener is to be replaced.

## Patentansprüche

1. Verfahren zum Steuern des Ver- und Entriegelns während eines Batteriewechsels, wobei die Batterie durch mehrere Befestigungsmittel in eine, Elektrofahrzeug fixiert ist, **dadurch gekennzeichnet, dass** es Folgendes umfasst:
Schritt S100, Einstellen voreingestellter Ver- und Entriegelungsparameter jedes Befestigungsmittels oder Auslösen eines Vorgangs des Austauschs des Befestigungsmittels basierend auf einer gespeicherten Schlussfolgerung über den Befestigungsmittelzustand jedes Befestigungsmittels, wobei die voreingestellten Ver- und Entriegelungsparameter ein Drehmoment des Ein- und des Ausschraubens und eine Anzahl der Drehungen umfasst,
Schritt S200, Ausführen eines Vorgangs des Entriegelns für einen Batteriewechsel, eines Vorgangs des Batterieaustauschs und eines Vorgangs des Verriegelns beim Batteriewechsel, basierend auf den voreingestellten Ver- und Entriegelungsparametern jedes Befestigungsmittels, und
Schritt S300, Überwachen und Speichern von Echtzeit-Parametern des Ver- und Entriegelungsvorgangs jedes Befestigungsmittels in dem Prozess der Ent- und Verriegelungsvorgänge und Erhalten einer Schlussfolgerung über den Befestigungsmittelzustand jedes Befestigungsmittels durch Vergleichen der Echtzeit-Parameter des Ver- und Entriegelungsvorgangs jedes Befestigungsmittels mit Normen für die Ver- und Entriegelungsparameter, wobei die Echtzeit-Parameter des Ver- und Entriegelungsvorgangs ein Drehmoment des Ein- und des Ausschraubens und eine Anzahl der Drehungen beinhalten, die Normen für die Ver- und Entriegelungsparameter ein Drehmoment des Ein- und des Ausschraubens und eine Anzahl der Drehungen beinhalten, und die Schlussfolgerung über den Befestigungsmittelzustand einen Wartungszustand des Befestigungsmittels und adaptive Ver- und Entriegelungsparameter jedes Befestigungsmittels beinhaltet,
wobei die Schlussfolgerung über den Befestigungsmittelzustand das Folgende beinhaltet:
der Wartungszustand des Befestigungsmittels ist normal und die adaptiven Ver- und Entriegelungsparameter entsprechen den vorherigen eingestellten Ver- und Entriegelungsparametern, oder
der Wartungszustand des Befestigungsmittels ist normal und die adaptiven Ver- und Entriegelungsparameter beinhalten ein erhöhtes oder verringertes Drehmoment des Ein- und des Ausschraubens des Befestigungsmittels und/oder eine erhöhte oder verminderte Anzahl der Drehungen des Befestigungsmittels, oder
der Wartungszustand des Befestigungsmittels ist anomal und das Befestigungsmittel ist auszutauschen.

2. Steuerverfahren nach Anspruch 1, **dadurch gekennzeichnet, dass** der Schritt S100 Folgendes umfasst:
Schritt S110, Einstellen der voreingestellten Ver- und Entriegelungsparameter als die Normen für den Ver- und Entriegelungsparameter, falls keine gespeicherte Schlussfolgerung über den Befestigungsmittelzustand vorhanden ist,
Schritt S120, Einstellen der voreingestellten Ver- und Entriegelungsparameter basierend auf den adaptiven Ver- und Entriegelungsparametern, falls die gespeicherte Schlussfolgerung über den Befestigungsmittelzustand zeigt, dass der Wartungszustand des Befestigungsmittels normal ist, und
Schritt S130, Auslösen des Vorgangs des Austauschs des Befestigungsmittels, um das Befestigungsmittel nach Abschluss des Vorgangs des Entriegelns für einen Batteriewechsel auszutauschen, falls die gespeicherte Schlussfolgerung über den Befestigungsmittelzustand zeigt, dass der Wartungszustand des Befestigungsmittels anomal ist.

3. Steuerverfahren nach Anspruch 1, **dadurch gekennzeichnet, dass** der Schritt S200 einen Entriegelungsmodus S210 umfasst, in dem die folgenden Teilschritte ausgeführt werden:
einen Teilschritt des Verbindens S211, in dem eine Vorrichtung zum Ver- und Entriegeln von Befestigungsmitteln in einem ersten eingestellten Intervall der Anzahl von Drehungen zum Verbinden angetrieben wird, um sich auf einem Ende des Befestigungsmittels zu zentrieren und mit diesem in Eingriff zu gelangen, bis ein Drehmoment des Einschraubens der Vorrichtung zum Ver- und Entriegeln von Befestigungsmitteln auf ein eingestelltes Zentrierungsdrehmoment steigt, zu welchem Zeitpunkt bestimmt wird, dass das Zentrieren der Vorrichtung zum Ver- und Entriegeln von Befestigungsmitteln auf dem Befestigungsmittel erfolgreich war, und/oder
einen Teilschritt des Entriegelns S212, in dem die Vorrichtung zum Ver- und Entriegeln von Befestigungsmitteln in einem eingestellten Intervall der Anzahl von Drehungen zum Entriegeln angetrieben wird, um das Befestigungsmittel auszuschrauben, bis ein Drehmoment des Ausschraubens auf ein eingestelltes Entriegelungsdrehmoment sinkt, zu welchem Zeitpunkt bestimmt wird, dass das Befestigungsmittel erfolgreich entriegelt wurde, und/oder
einen Teilschritt des Bestimmens einer Anomalie S213, in dem bestimmt wird, dass die Zentrierung des Befestigungsmittels anomal ist, falls das Drehmoment des Einschraubens nicht auf das eingestellte Zentrierungsdrehmoment steigt, wenn die Anzahl der Drehungen zum Verbinden der Vorrichtung zum Ver- und Entriegeln von Befestigungsmitteln innerhalb des ersten eingestellten Intervalls der Anzahl von Drehungen zum Verbinden liegt, und/oder bestimmt wird, dass das Entriegeln des Befestigungsmittels anomal ist, falls das Drehmoment des Ausschraubens nicht auf das eingestellte Entriegelungsdrehmoment sinkt, wenn die Anzahl der Drehungen zum Entriegeln der Vorrichtung zum Ver- und Entriegeln von Befestigungsmitteln größer als das eingestellte Intervall der Anzahl von Drehungen zum Entriegeln ist.

4. Steuerverfahren nach Anspruch 1, **dadurch gekennzeichnet, dass** der Schritt des Batterieaustauschs S200 einen Verriegelungsmodus S220 umfasst, in dem die folgenden Teilschritte ausgeführt werden:
einen Teilschritt des Verbindens S221, in dem eine Vorrichtung zum Ver- und Entriegeln von Befestigungsmitteln innerhalb eines zweiten eingestellten Intervalls der Anzahl der Drehungen zum Verriegeln angetrieben wird, um sich auf einem Ende des Befestigungsmittels zu zentrieren und mit diesem in Eingriff zu gelangen, und/oder
einen Teilschritt des Verriegelns S222, in dem die Vorrichtung zum Ver- und Entriegeln von Befestigungsmitteln innerhalb eines eingestellten Intervalls der Anzahl der Drehungen zum Verriegeln angetrieben wird, das Befestigungsmittel auszuschrauben, bis ein Drehmoment des Einschraubens auf ein eingestelltes Verriegelungsdrehmoment steigt, zu welchem Zeitpunkt bestimmt wird, dass das Befestigungsmittel erfolgreich verriegelt wurde, und/oder
einen Teilschritt des Bestimmens einer Anomalie S223, in dem bestimmt wird, dass die Verriegelung des Befestigungsmittels anomal ist, falls die Anzahl der Drehungen zum Verriegeln der Vorrichtung zum Ver- und Entriegeln von Befestigungsmitteln kleiner als das eingestellte Intervall der Anzahl von Drehungen zum Verriegeln ist, wenn das Drehmoment des Einschraubens auf das eingestellte Verriegelungsdrehmoment steigt.

5. Verfahren zum Steuern des Ver- und Entriegelns während eines Batteriewechsels, wobei die Batterie durch mehrere Befestigungsmittel in einem Elektrofahrzeug fixiert ist, **dadurch gekennzeichnet, dass** es Folgendes umfasst:
Schritt S100, Erhalten einer Schlussfolgerung über den Befestigungsmittelzustand jedes Befestigungsmittels aus dem Verarbeiten durch Vergleichen der gespeicherten Echtzeit-Parameter des Ver- und Entriegelungsvorgangs jedes Befestigungsmittels mit Normen für die Ver- und Entriegelungsparameter, wobei die Echtzeit-Parameter des Ver- und Entriegelungsvorgangs ein Drehmoment des Ein- und des Ausschraubens und eine Anzahl der Drehungen beinhalten, die Normen für die Ver- und Entriegelungsparameter ein Drehmoment des Ein- und des Ausschraubens und eine Anzahl der Drehungen beinhalten, und die Schlussfolgerung über den Befestigungsmittelzustand einen Wartungszustand des Befestigungsmittels und adaptive Ver- und Entriegelungsparameter beinhaltet, und Einstellen voreingestellter Ver- und Entriegelungsparameter jedes Befestigungsmittels oder Austauschen des Befestigungsmittels, basierend auf der erhaltenen Schlussfolgerung über den Befestigungsmittelzustand jedes Befestigungsmittels, wobei die voreingestellten Ver- und Entriegelungsparameter ein Drehmoment des Ein- und des Ausschraubens und eine Anzahl der Drehungen umfasst,
Schritt S200, Ausführen eines Vorgangs des Verriegelns beim Batteriewechsel und eines Vorgangs des Entriegelns für den Batteriewechsel, basierend auf den voreingestellten Ver- und Entriegelungsparametern jedes Befestigungsmittels, und Ausführen eines Batterieaustauschvorgangs und
Schritt S300, Überwachen und Speichern der Echtzeit-Parameter des Ver- und Entriegelungsvorgangs jedes Befestigungsmittels,
wobei die Schlussfolgerung über den Befestigungsmittelzustand das Folgende beinhaltet:
der Wartungszustand des Befestigungsmittels ist normal und die adaptiven Ver- und Entriegelungsparameter entsprechen den vorherigen voreingestellten Ver- und Entriegelungsparametern, oder
der Wartungszustand des Befestigungsmittels ist normal und die adaptiven Ver- und Entriegelungsparameter beinhalten ein erhöhtes oder verringertes Drehmoment des Ein- und des Ausschraubens des Befestigungsmittels und/oder eine erhöhte oder verminderte Anzahl der Drehungen des Befestigungsmittels, oder
der Wartungszustand des Befestigungsmittels ist anomal und das Befestigungsmittel ist auszutauschen.

6. Steuerverfahren nach Anspruch 5, **dadurch gekennzeichnet, dass** der Schritt S100 Folgendes umfasst:
Schritt S110, Einstellen der voreingestellten Ver- und Entriegelungsparameter als die Normen für die Ver- und Entriegelungsparameter, falls keine Echtzeit-Parameter des Ver- und Entriegelungsvorgangs gespeicherte und keine Schlussfolgerung über den Befestigungsmittelzustand gespeichert sind,
Schritt S120, Einstellen der voreingestellten Ver- und Entriegelungsparameter basierend auf den adaptiven Ver- und Entriegelungsparametern, falls die gespeicherte Schlussfolgerung über den Befestigungsmittelzustand zeigt, dass der Wartungszustand des Befestigungsmittels normal ist, und
Schritt S130, Austauschen des Befestigungsmittels nach Abschluss des Vorgangs des Entriegelns beim Batteriewechsel abgeschlossen ist, falls die gespeicherte Schlussfolgerung über den Befestigungsmittelzustand zeigt, dass der Wartungszustand des Befestigungsmittels anomal ist.

7. Steuerverfahren nach Anspruch 5, **dadurch gekennzeichnet, dass** der Schritt des Batterieaustauschs S200 einen Entriegelungsmodus S210 umfasst, in dem die folgenden Teilschritte ausgeführt werden:
einen Teilschritt des Verbindens S211, in dem eine Vorrichtung zum Ver- und Entriegeln von Befestigungsmitteln in einem ersten eingestellten Intervall der Anzahl von Drehungen zum Verbinden angetrieben wird, um sich auf einem Ende des Befestigungsmittels zu zentrieren und mit diesem in Eingriff zu gelangen, bis ein Einschraubdrehmoment der Vorrichtung zum Ver- und Entriegeln von Befestigungsmitteln auf einen eingestelltes Zentrierungsdrehmoment steigt, zu welchem Zeitpunkt bestimmt wird, dass das Zentrieren der Vorrichtung zum Ver- und Entriegeln von Befestigungsmitteln auf dem Befestigungsmittel erfolgreich war, und/oder
einen Teilschritt des Entriegelns S212, in dem die Vorrichtung zum Ver- und Entriegeln von Befestigungsmitteln in einem eingestellten Intervall der Anzahl von Drehungen zum Entriegeln angetrieben wird, um das Befestigungsmittel auszuschrauben, bis ein Drehmoment des Ausschraubens auf ein eingestelltes Entriegelungsdrehmoment sinkt, zu welchem Zeitpunkt bestimmt wird, dass das Befestigungsmittel erfolgreich entriegelt wurde, und/oder
einen Teilschritt des Bestimmens einer Anomalie S213, in dem bestimmt wird, dass die Zentrierung des Befestigungsmittels anomal ist, falls das Drehmoment des Einschraubens nicht auf die eingestellte Zentrierungsdrehmoment steigt, wenn die Anzahl der Drehungen zum Verbinden der Vorrichtung zum Ver- und Entriegeln von Befestigungsmitteln innerhalb des ersten eingestellten Intervalls der Anzahl von Drehungen zum Verbinden liegt, und/oder bestimmt wird, dass das Entriegeln des Befestigungsmittels anomal ist, falls das Drehmoment des Ausschraubens nicht auf das eingestellte Entriegelungsdrehmoment sinkt, wenn die Anzahl der Drehungen zum Entriegeln der Vorrichtung zum Ver- und Entriegeln von Befestigungsmitteln größer als das eingestellte Intervall der Anzahl von Drehungen zum Entriegeln ist,.

8. Steuerverfahren nach Anspruch 5, **dadurch gekennzeichnet, dass** der Schritt des Batterieaustauschs S200 einen Verriegelungsmodus S220 umfasst und im Verriegelungsmodus S220 die folgenden Teilschritte ausgeführt werden:
einen Teilschritt des Verbindens S221, in dem eine Vorrichtung zum Ver- und Entriegeln von Befestigungsmitteln innerhalb eines zweiten eingestellten Intervalls der Anzahl der Drehungen zum Verriegeln angetrieben wird, um sich auf einem Ende des Befestigungsmittels zu zentrieren und mit diesem in Eingriff zu gelangen, und/oder
einen Teilschritt des Verriegelns S222, in dem die Vorrichtung zum Ver- und Entriegeln von Befestigungsmitteln innerhalb eines eingestellten Intervalls der Anzahl der Drehungen zum Verriegeln angetrieben wird, das Befestigungsmittel auszuschrauben, bis ein Drehmoment des Einschraubens auf ein eingestelltes Verriegelungsdrehmoment steigt, zu welchem Zeitpunkt bestimmt wird, dass das Befestigungsmittel erfolgreich verriegelt wurde, und/oder
einen Teilschritt des Bestimmens einer Anomalie S223, in dem bestimmt wird, dass die Verriegelung des Befestigungsmittels anomal ist, falls die Anzahl der Drehungen zum Verriegeln der Vorrichtung zum Ver- und Entriegeln von Befestigungsmitteln kleiner als das eingestellte Intervall der Anzahl von Drehungen zum Verriegeln ist, und/oder in dem bestimmt wird, dass die Verriegelung des Befestigungsmittels anomal ist, falls das Drehmoment des Einschraubens nicht auf das eingestellte Verriegelungsdrehmoment steigt, wenn die Anzahl der Drehungen zum Verriegeln der Vorrichtung zum Ver- und Entriegeln von Befestigungsmitteln größer als das eingestellte Intervall der Anzahl von Drehungen zum Verriegeln ist.

9. System (100) zum Steuern des Ver- und Entriegelns während eines Batteriewechsels, wobei die Batterie durch mehrere Befestigungsmittel in einem Elektrofahrzeug fixiert ist, **dadurch gekennzeichnet, dass** es Folgendes umfasst:
ein Modul (110) zur Parameterüberwachung zum Überwachen von Echtzeit-Parametern des Ver- und Entriegelungsvorgangs jedes Befestigungsmittels, wobei die Echtzeit-Parameter des Ver- und Entriegelungsvorgangs ein Drehmoment des Ein- und des Ausschraubens und eine Anzahl der Drehungen beinhalten, ein Modul (120) zum Speichern von Parametern zum Speichern der Echtzeit-Parameter des Ver- und Entriegelungsvorgangs jedes Befestigungsmittels,
ein Modul (130) zum Steuern eines Batteriewechsels, das verwendet wird, um durch Vergleichen der Echtzeit-Parameter des Ver- und Entriegelungsvorgangs jedes Befestigungsmittels mit Normen für die Ver- und Entriegelungsparameter, wobei die Normen für die Ver- und Entriegelungsparameter ein Drehmoment des Ein- und des Ausschraubens und eine Anzahl der Drehungen beinhalten, eine jeweilige Schlussfolgerung über den Befestigungsmittelzustand zu erhalten, und die Schlussfolgerung über den Befestigungsmittelzustand einen Wartungszustand des Befestigungsmittels und adaptive Ver- und Entriegelungsparameter jedes Befestigungsmittels beinhaltet, und zum Einstellen voreingestellter Ver- und Entriegelungsparameter des Befestigungsmittels oder Austauschen des Befestigungsmittels, basierend auf einer gespeicherten Schlussfolgerung über den Befestigungsmittelzustand jedes Befestigungsmittels, wobei die voreingestellten Ver- und Entriegelungsparameter ein Drehmoment des Ein- und des Ausschraubens und eine Anzahl der Drehungen beinhalten, und
ein Modul (140) zum Ausführen des Batteriewechsels, das basierend auf den voreingestellten Ver- und Entriegelungsparametern jedes Befestigungsmittels, die durch das Modul (130) zum Steuern des Batteriewechsels eingestellt werden, einen Vorgang des Verriegelns beim Batteriewechsel und einen Vorgang des Entriegelns für den Batteriewechsel ausführt und einen Batterieaustauschvorgang ausführt,
wobei die Schlussfolgerung über den Befestigungsmittelzustand das Folgende beinhaltet:
der Wartungszustand des Befestigungsmittels ist normal und die adaptiven Ver- und Entriegelungsparameter entsprechen den vorherigen voreingestellten Ver- und Entriegelungsparametern oder
der Wartungszustand des Befestigungsmittels ist normal und die adaptiven Ver- und Entriegelungsparameter beinhalten ein erhöhtes oder verringertes Drehmoment des Ein- und des Ausschraubens des Befestigungsmittels und/oder eine erhöhte oder verminderte Anzahl der Drehungen des Befestigungsmittels oder
der Wartungszustand des Befestigungsmittels ist anomal und das Befestigungsmittel ist auszutauschen.

## Revendications

1. Procédé de commande pour un blocage et un déblocage durant un échange de batterie, la batterie étant fixée dans un véhicule électrique par une pluralité d'éléments de fixation, **caractérisé en ce qu'**il comprend :
étape S100, définir des paramètres de blocage et de déblocage prédéfinis de chaque élément de fixation ou déclencher une opération de remplacement de l'élément de fixation en fonction d'une conclusion d'état d'élément de fixation enregistrée de chaque élément de fixation, les paramètres de blocage et de déblocage prédéfinis comprenant un couple de vissage et de dévissage et un nombre de tours ;
étape S200, exécuter une opération de déblocage d'échange de batterie, une opération de remplacement de batterie et une opération de blocage d'échange de batterie en fonction des paramètres de blocage et de déblocage prédéfinis de chaque élément de fixation ; et
étape S300, contrôler et enregistrer des paramètres d'opérations de blocage et de déblocage en temps réel de chaque élément de fixation au cours d'opérations de déblocage et de blocage, et obtenir une conclusion d'état d'élément de fixation de chaque élément de fixation en comparant les paramètres d'opérations de blocage et de déblocage en temps réel de chaque élément de fixation avec des paramètres de blocage et de déblocage normatifs, les paramètres d'opérations de blocage et de déblocage en temps réel comprenant un couple de vissage et de dévissage et un nombre de tours, les paramètres de blocage et de déblocage normatifs comprenant un couple de vissage et de dévissage et un nombre de tours, et la conclusion d'état d'élément de fixation comprenant un état de service d'élément de fixation et des paramètres de blocage et de déblocage adaptatifs de chaque élément de fixation,
la conclusion d'état d'élément de fixation comprenant les suivantes :
l'état de service d'élément de fixation est normal, et les paramètres de blocage et de déblocage adaptatifs correspondent aux paramètres de blocage et de déblocage prédéfinis précédents ; ou
l'état de service d'élément de fixation est normal, et les paramètres de blocage et de déblocage adaptatifs comprennent un couple de vissage et de dévissage de l'élément de fixation augmenté ou diminué, et/ou un nombre de tours de l'élément de fixation augmenté ou diminué ; ou
l'état de service d'élément de fixation est anormal, et l'élément de fixation doit être remplacé.

2. Procédé de commande selon la revendication 1, **caractérisé en ce que** l'étape S100 comprend :
étape S110, définir les paramètres de blocage et de déblocage prédéfinis comme paramètres de blocage et de déblocage normatifs, s'il n'existe aucune conclusion d'état d'élément de fixation enregistrée ;
étape S120, définir les paramètres de blocage et de déblocage prédéfinis en fonction des paramètres de blocage et de déblocage adaptatifs, si la conclusion d'état d'élément de fixation enregistrée indique que l'état de service d'élément de fixation est normal ; et
étape S130, déclencher l'opération de remplacement de l'élément de fixation de façon à remplacer l'élément de fixation une fois l'opération de déblocage d'échange de batterie terminée, si la conclusion d'état d'élément de fixation enregistrée indique que l'état de service d'élément de fixation est anormal.

3. Procédé de commande selon la revendication 1, **caractérisé en ce que** l'étape S200 comprend un mode de déblocage S210, dans lequel les sous-étapes suivantes sont exécutées :
une sous-étape d'accouplement S211, dans laquelle un dispositif de blocage et déblocage d'élément de fixation est actionné, dans les limites d'un premier intervalle défini du nombre de tours pour l'accouplement, de façon à le centrer sur une extrémité de l'élément de fixation et à le mettre en prise avec celle-ci jusqu'à ce qu'un couple de vissage du dispositif de blocage et déblocage d'élément de fixation augmente de manière à atteindre un couple de centrage défini, et il est alors déterminé que le centrage du dispositif de blocage et déblocage d'élément de fixation sur l'élément de fixation a réussi ; et/ou
une sous-étape de déblocage S212, dans laquelle le dispositif de blocage et déblocage d'élément de fixation est actionné, dans les limites d'un intervalle défini du nombre de tours pour le déblocage, de façon à dévisser l'élément de fixation jusqu'à ce qu'un couple de dévissage diminue de manière à atteindre un couple de déblocage défini, et il est alors déterminé que le déblocage de l'élément de fixation a réussi ; et/ou
une sous-étape de détermination d'anomalie S213, dans laquelle, lorsque le nombre de tours pour l'accouplement du dispositif de blocage et déblocage d'élément de fixation est dans les limites du premier intervalle défini du nombre de tours pour l'accouplement, si le couple de vissage n'augmente pas de manière atteindre le couple de centrage défini, il est déterminé que le centrage pour l'élément de fixation est anormal ; et/ou lorsque le nombre de tours pour le déblocage du dispositif de blocage et déblocage d'élément de fixation est supérieur à l'intervalle défini du nombre de tours pour le déblocage, si le couple de dévissage ne diminue pas de manière à atteindre le couple de déblocage défini, il est déterminé que le déblocage de l'élément de fixation est anormal.

4. Procédé de commande selon la revendication 1, **caractérisé en ce que** l'étape d'échange de batterie S200 comprend un mode de blocage S220, dans lequel les sous-étapes suivantes sont exécutées :
une sous-étape d'accouplement S221, dans laquelle un dispositif de blocage et déblocage d'élément de fixation est actionné, dans les limites d'un second intervalle défini du nombre de tours pour l'accouplement, de façon à le centrer sur une extrémité de l'élément de fixation et à le mettre en prise avec celle-ci ; et/ou
une sous-étape de blocage S222, dans laquelle le dispositif de blocage et déblocage d'élément de fixation est actionné, dans les limites d'un intervalle défini du nombre de tours pour le blocage, de façon à dévisser l'élément de fixation jusqu'à ce qu'un couple de vissage augmente de manière à atteindre un couple de blocage défini, et il est alors déterminé que le blocage de l'élément de fixation a réussi ; et/ou
une sous-étape de détermination d'anomalie S223, dans laquelle, lorsque le couple de vissage augmente de manière à atteindre le couple de blocage défini, si le nombre de tours pour le blocage du dispositif de blocage et déblocage d'élément de fixation est inférieur à l'intervalle défini du nombre de tours pour le blocage, il est déterminé que le blocage de l'élément de fixation est anormal ; et/ou lorsque le nombre de tours pour le blocage du dispositif de blocage et déblocage d'élément de fixation est supérieur à l'intervalle défini du nombre de tours pour le blocage, si le couple de vissage n'augmente pas de manière à atteindre le couple de blocage défini, il est déterminé que le blocage de l'élément de fixation est anormal.

5. Procédé de commande pour un blocage et un déblocage durant un échange de batterie, la batterie étant fixée dans un véhicule électrique par une pluralité d'éléments de fixation, **caractérisé en ce qu'**il comprend :
étape S100, obtenir une conclusion d'état d'élément de fixation de chaque élément de fixation par traitement en comparant les paramètres d'opérations de blocage et de déblocage en temps réel enregistrés de chaque élément de fixation avec des paramètres de blocage et de déblocage normatifs, les paramètres d'opérations de blocage et de déblocage en temps réel comprenant un couple de vissage et de dévissage et un nombre de tours, les paramètres de blocage et de déblocage normatifs comprenant un couple de vissage et de dévissage et un nombre de tours, et la conclusion d'état d'élément de fixation comprenant un état de service d'élément de fixation et des paramètres de blocage et de déblocage adaptatifs ; et définir des paramètres de blocage et de déblocage prédéfinis de chaque élément de fixation ou remplacer l'élément de fixation en fonction de la conclusion d'état d'élément de fixation obtenue de chaque élément de fixation, les paramètres de blocage et de déblocage prédéfinis comprenant un couple de vissage et de dévissage et un nombre de tours ;
étape S200, exécuter une opération de blocage d'échange de batterie et une opération de déblocage d'échange de batterie en fonction des paramètres de blocage et de déblocage prédéfinis de chaque élément de fixation, et exécuter une opération de remplacement de batterie ; et
étape S300, contrôler et enregistrer les paramètres d'opérations de blocage et de déblocage en temps réel de chaque élément de fixation,
la conclusion d'état d'élément de fixation comprenant les suivantes :
l'état de service d'élément de fixation est normal, et les paramètres de blocage et de déblocage adaptatifs correspondent aux paramètres de blocage et de déblocage prédéfinis précédents ; ou
l'état de service d'élément de fixation est normal, et les paramètres de blocage et de déblocage adaptatifs comprennent un couple de vissage et de dévissage de l'élément de fixation augmenté ou diminué, et/ou un nombre de tours de l'élément de fixation augmenté ou diminué ; ou
l'état de service d'élément de fixation est anormal, et l'élément de fixation doit être remplacé.

6. Procédé de commande selon la revendication 5, **caractérisé en ce que** l'étape S100 comprend :
étape S110, définir les paramètres de blocage et de déblocage prédéfinis comme paramètres de blocage et de déblocage normatifs, s'il n'existe pas de paramètres d'opérations de blocage et de déblocage en temps réel et s'il n'existe aucune conclusion d'état d'élément de fixation enregistrée ;
étape S120, définir les paramètres de blocage et de déblocage prédéfinis en fonction des paramètres de blocage et de déblocage adaptatifs, si la conclusion d'état d'élément de fixation enregistrée indique que l'état de service d'élément de fixation est normal ; et
étape S130, remplacer l'élément de fixation une fois l'opération de déblocage d'échange de batterie terminée, si la conclusion d'état d'élément de fixation enregistrée indique que l'état de service d'élément de fixation est anormal.

7. Procédé de commande selon la revendication 5, **caractérisé en ce que** l'étape d'échange de batterie S200 comprend un mode de déblocage S210, dans lequel les sous-étapes suivantes sont exécutées :
une sous-étape d'accouplement S211, dans laquelle un dispositif de blocage et déblocage d'élément de fixation est actionné, dans les limites d'un premier intervalle défini du nombre de tours pour l'accouplement, de façon à le centrer sur une extrémité de l'élément de fixation et à le mettre en prise avec celle-ci jusqu'à ce qu'un couple de vissage du dispositif de blocage et déblocage d'élément de fixation augmente de manière à atteindre un couple de centrage défini, et il est alors déterminé que le centrage du dispositif de blocage et déblocage d'élément de fixation sur l'élément de fixation a réussi ; et/ou
une sous-étape de déblocage S212, dans laquelle le dispositif de blocage et déblocage d'élément de fixation est actionné, dans les limites d'un intervalle défini du nombre de tours pour le déblocage, de façon à dévisser l'élément de fixation jusqu'à ce qu'un couple de dévissage diminue de manière à atteindre un couple de déblocage défini, et il est alors déterminé que le déblocage de l'élément de fixation a réussi ; et/ou
une sous-étape de détermination d'anomalie S213, dans laquelle, lorsque le nombre de tours pour l'accouplement du dispositif de blocage et déblocage d'élément de fixation est dans les limites du premier intervalle défini du nombre de tours pour l'accouplement, si le couple de vissage n'augmente pas de manière à atteindre le couple de centrage défini, il est déterminé que le centrage pour l'élément de fixation est anormal ; et/ou lorsque le nombre de tours pour le déblocage du dispositif de blocage et déblocage d'élément de fixation est supérieur à l'intervalle défini du nombre de tours pour le déblocage, si le couple de dévissage ne diminue pas de manière à atteindre le couple de déblocage défini, il est déterminé que le déblocage de l'élément de fixation est anormal.

8. Procédé de commande selon la revendication 5, **caractérisé en ce que** l'étape d'échange de batterie S200 comprend un mode de blocage S220, et dans le mode de blocage S220, les sous-étapes suivantes sont exécutées :
une sous-étape d'accouplement S221, dans laquelle un dispositif de blocage et déblocage d'élément de fixation est actionné, dans les limites d'un second intervalle défini du nombre de tours pour l'accouplement, de façon à le centrer sur une extrémité de l'élément de fixation et à le mettre en prise avec celle-ci ; et/ou
une sous-étape de blocage S222, dans laquelle le dispositif de blocage et déblocage d'élément de fixation est actionné, dans les limites d'un intervalle défini du nombre de tours pour le blocage, de façon à dévisser l'élément de fixation jusqu'à ce qu'un couple de vissage augmente de manière à atteindre un couple de blocage défini, et il est alors déterminé que le blocage de l'élément de fixation a réussi ; et/ou
une sous-étape de détermination d'anomalie S223, dans laquelle, lorsque le couple de vissage augmente de manière à atteindre le couple de blocage défini, si le nombre de tours pour le blocage du dispositif de blocage et déblocage d'élément de fixation est inférieur à l'intervalle défini du nombre de tours pour le blocage, il est déterminé que le blocage de l'élément de fixation est anormal ; et/ou lorsque le nombre de tours pour le blocage du dispositif de blocage et déblocage d'élément de fixation est supérieur à l'intervalle défini du nombre de tours pour le blocage, si le couple de vissage n'augmente pas de manière à atteindre le couple de blocage défini, il est déterminé que le blocage de l'élément de fixation est anormal.

9. Système de commande (100) pour un blocage et un déblocage durant un échange de batterie, la batterie étant fixée dans un véhicule électrique par une pluralité d'éléments de fixation, **caractérisé en ce qu'**il comprend :
un module de contrôle de paramètres (110) destiné à contrôler des paramètres d'opérations de blocage et de déblocage en temps réel de chaque élément de fixation, les paramètres d'opérations de blocage et de déblocage en temps réel comprenant un couple de vissage et de dévissage et un nombre de tours ;
un module d'enregistrement de paramètres (120) destiné à enregistrer les paramètres d'opérations de blocage et de déblocage en temps réel de chaque élément de fixation ;
un module de commande d'échange de batterie (130) servant à obtenir une conclusion d'état d'élément de fixation respective en comparant les paramètres d'opérations de blocage et de déblocage en temps réel de chaque élément de fixation avec des paramètres de blocage et de déblocage normatifs, les paramètres de blocage et de déblocage normatifs comprenant un couple de vissage et de dévissage et un nombre de tours, et la conclusion d'état d'élément de fixation comprenant un état de service d'élément de fixation et des paramètres de blocage et de déblocage adaptatifs de chaque élément de fixation ; et à définir des paramètres de blocage et de déblocage prédéfinis de chaque élément de fixation ou à remplacer l'élément de fixation en fonction d'une conclusion d'état d'élément de fixation enregistrée de chaque élément de fixation, les paramètres de blocage et de déblocage prédéfinis comprenant un couple de vissage et de dévissage et un nombre de tours ; et
un module d'exécution d'échange de batterie (140), qui exécute une opération de blocage d'échange de batterie et une opération de déblocage d'échange de batterie en fonction des paramètres de blocage et de déblocage prédéfinis de chaque élément de fixation définis par le module de commande d'échange de batterie (130), et exécute une opération de remplacement de batterie,
la conclusion d'état d'élément de fixation comprenant les suivantes :
l'état de service d'élément de fixation est normal, et les paramètres de blocage et de déblocage adaptatifs correspondent aux paramètres de blocage et de déblocage prédéfinis précédents ; ou
l'état de service d'élément de fixation est normal, et les paramètres de blocage et de déblocage adaptatifs comprennent un couple de vissage et de dévissage de l'élément de fixation augmenté ou diminué, et/ou un nombre de tours de l'élément de fixation augmenté ou diminué ; ou
l'état de service d'élément de fixation est anormal, et l'élément de fixation doit être remplacé.
